# EUROPÄISCHE PATENTANMELDUNG

(11) **EP 1 947 567 A2**
(43) Veröffentlichungstag der Anmeldung: **23.07.2008**
(21) Anmeldenummer: 07024281.3
(22) Anmeldetag: 14.12.2007
(51) Int. Cl.: G06F 11/36

(54) **Verfahren und Vorrichtung zum automatischen Testen von modellbasierten Funktionen**

(30) Priorität: 20.12.2006 DE 102006060322
(71) Anmelder: Deutsche Telekom AG, 53113 Bonn (DE)
(72) Erfinder: Moser, Rainer, Dr., 70565 Stuttgart (DE)

(57) **Zusammenfassung**

Verfahren und Vorrichtung zum automatischen Test von Simulationsmodellen für Softwarefunktionen, umfassend ein Simulationsmodell, das aus einer Mehrzahl von Objekten besteht, umfassend die folgenden Schritte:
- Herauskopieren eines oder einer Mehrzahl von Objekten aus dem Simulationsmodell auf der Basis von Selektionskriterien;
- automatisches Einbetten dieser herauskopierten Objekte in ein Template, das erneut ein simulierbares Testmodell bereitstellt;
- automatisches Erzeugen einer Tabelle, in der Eingabewerte, Zeitwerte und Ausgabewerte für Eingänge und Ausgänge der herauskopierten Objekte definierbar und editierbar sind;
- Bestimmung der Eingabewerte, Zeitwerte und Ausgabewerte für Eingänge und Ausgänge als Testdaten;
- automatische Simulation des Testmodells mit den Testdaten;
- automatisches Vergleichen der Ergebnisse und Erzeugung eines Testberichtes.

## Beschreibung

Die Erfindung betrifft ein Verfahren und eine Vorrichtung zum automatischen Testen von Softwaremodellen, insbesondere betrifft die Erfindung ein Verfahren und eine Vorrichtung zum Testen von Teilen bzw. Komponenten der Modelle.

### Hintergrund der Erfindung:

Werkzeuge bieten heute die Möglichkeit, Simulationsmodelle für Softwarefunktionen auf Modellebende zu testen. Bekannte Produkte dieser Art von Software sind V&V Toolbox (www.mathworks.de/products/simverification/, www.mathworks.de/products/systemtest/) sowie Tessy (www.hitex.com/con-test-tools.html). Die bestehenden Lösungen sind teilweise beschränkt darauf, dass Quellcode als Voraussetzung genutzt werden muss (Tessy). Es sind weiterhin vereinfachte Testvorgaben in Form von Signalverläufen zu berücksichtigen und die Testdaten sind ohne Bezug zu Parametern und anderen Signalen (V&V-Toolbox).

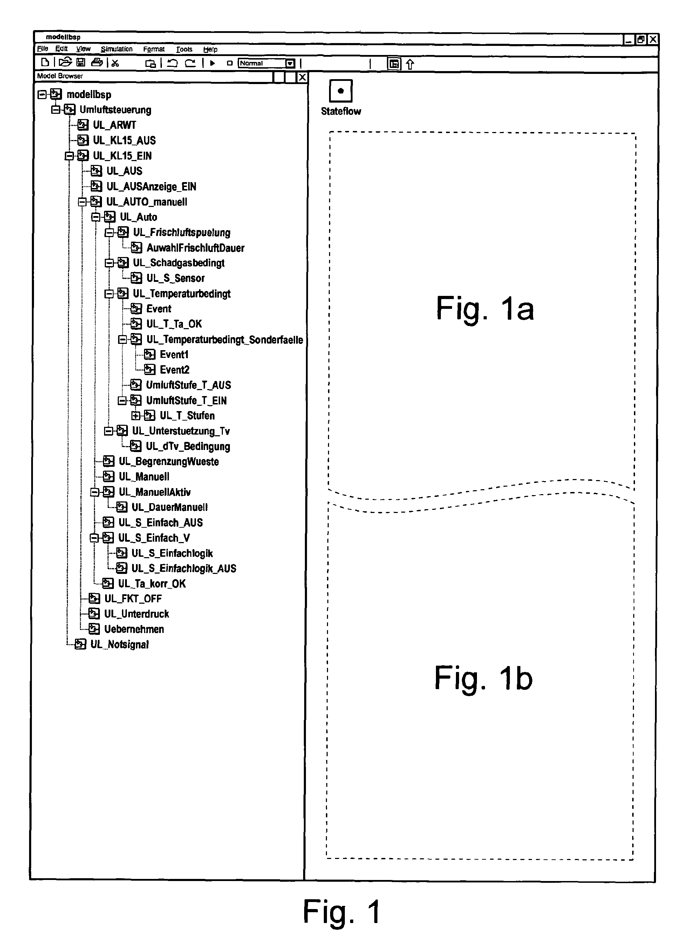

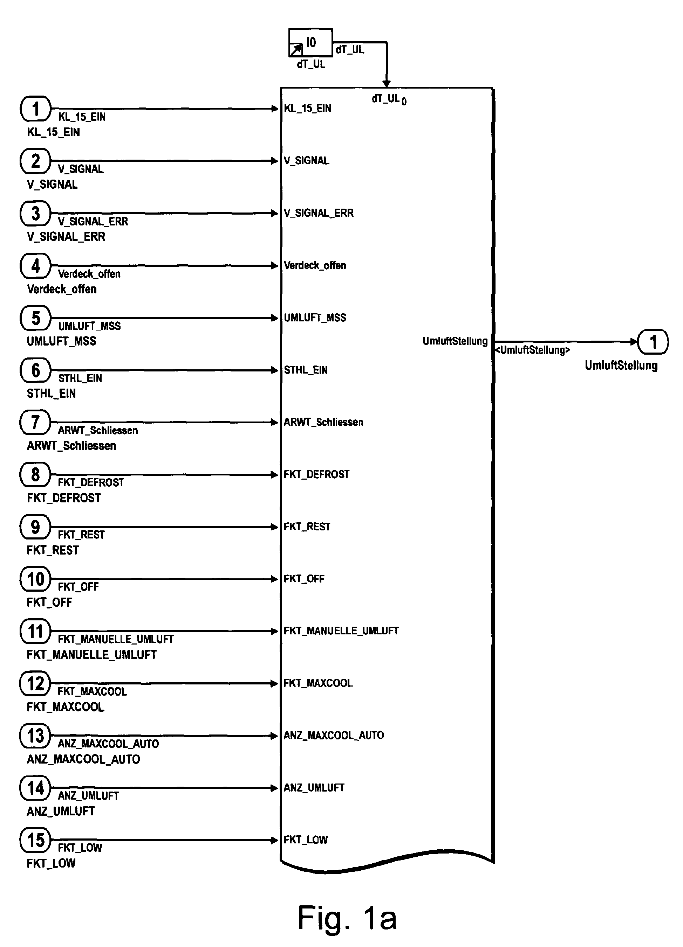

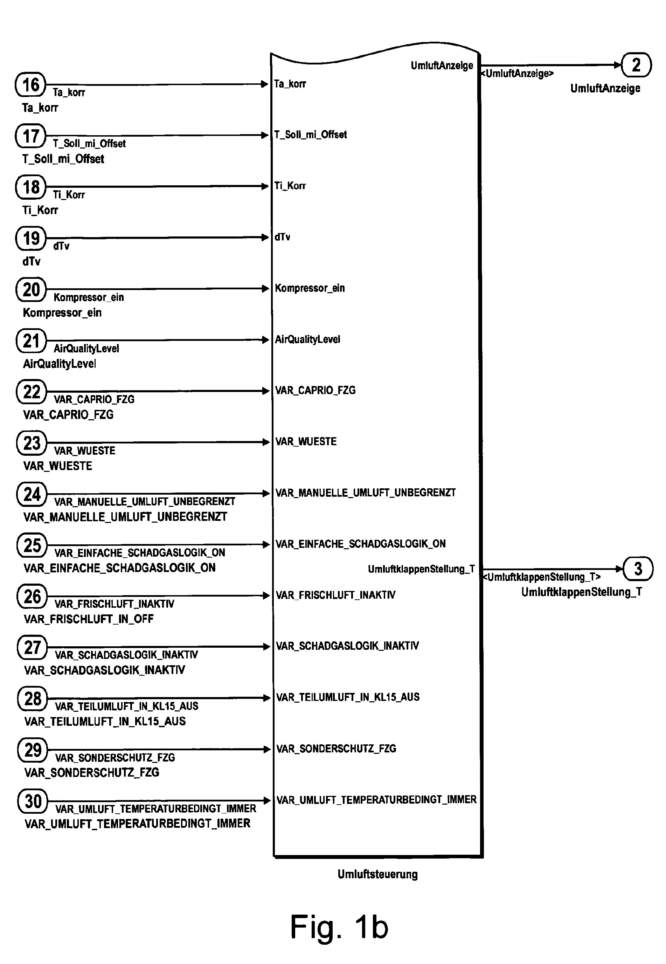

Die Voraussetzung bei der Erfindung ist die Erstellung eines simulierbaren Modells, wie es in Figur 1 gezeigt wird.

Das Modell besteht aus einer obersten Modellebene, Modulebene genannt, und weiteren Unterebenen, die sich prinzipiell nicht voneinander unterscheiden. Der Blackboxtest des Testers findet jedoch nur auf Modulebene und gegen das Pflichtenheft statt, während die Tests des Entwicklers ausschließlich auf den Unterebenen durchgeführt werden.

Die Testmethode unterscheidet nicht zwischen Blackbox- oder Whitebox-Test, dies ist nur eine Unterscheidung aus Prozesssicht.

Es ist zu beachten, dass die bisherigen Modelle nicht automatisch einen Test von Objekten bzw. Teilen des Modells erlauben.

### Überblick über die Erfindung:

Aufgabenstellung der vorliegenden Erfindung ist es, automatisch einen Test von Teilen des Modells zu erlauben insbesondere von Objekten, die Bestandteile des Modells sind.

Gelöst wird die vorliegende Erfindung durch ein Verfahren und eine Vorrichtung mit den Merkmalen der unabhängigen Ansprüche. Weitere Ausbildungen der Erfindung sind in den Unteransprüchen offenbart.

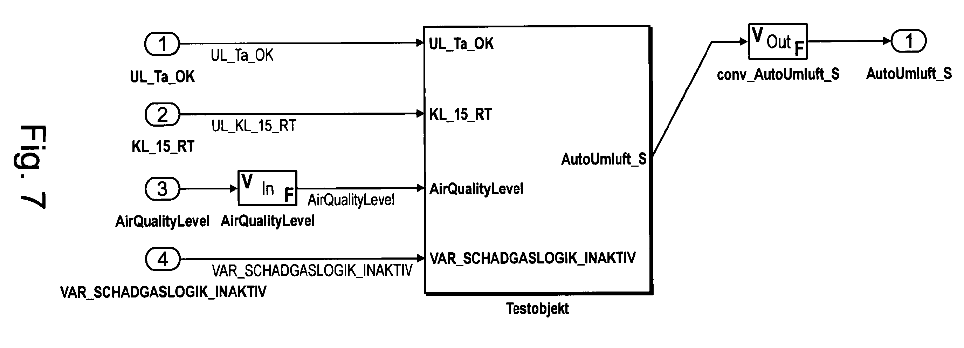

Insbesondere wird die Erfindung durch ein automatisches Verfahren gelöst, bei dem das vollständige Modell eingelesen wird und durch Vorgabe der Namen der Objekte, diese Objekte im Modell ermittelt werden, um diese dann in ein daraus generiertes Testmodell einzubetten, dessen Eigenschaften vom Ursprungsmodell abgeleitet werden und das erneut simuliert werden kann (vgl. Fig.7).

Zusätzlich werden in einer Tabelle, die vorzugsweise als Exceltabelle ausgebildet ist, die Testdaten definiert, die dann für die Simulation genutzt werden. Die Testdaten dienen als Eingangs- und Soll-Ausgangsdaten der logischen Softwarefunktionen. Es ist zu beachten, dass auch das Komplettmodell getestet werden kann.

Bei der Definition der Testdaten wird auf der Basis des Modells eine Vorlage für die Definition der Testfälle erstellt. Diese Vorlage verwendet der Testfallentwickler für die Erstellung der Testfälle. Der Testfall definiert die Eingangsgrößen zum Start des Testfalls und die erwarteten Ausgangsgrößen und eine Toleranzangabe. Bei der Testfalldefinition kann auf bestehende Signale oder Parameter zugegriffen werden (z.B. Ausgang y zum Zeitpunkt i hängt von Parameter P und Eingang u1 zum Zeitpunkt i-1:y[i]=P*u1[i-1] ab. Details kann man den Bildern entnehmen, die weiter unten beschrieben werden.

Das Testverfahren liest die manuell erstellten Testfälle ein und erzeugt Testdaten im Format des Simulations Werkzeuges. In der Simulation wird das Modell mit den im Testfall definierten Eingangsgrößen beaufschlagt und die Ausgangsgrößen aus dem Modell mit den erwarteten Ausgangsgrößen aus dem Testfall unter Berücksichtigung der Toleranzangabe verglichen.

Die Ergebnisse werden automatisch in einem Testreport zusammengestellt. Dieser Bericht definiert die Abdeckung der Anforderungen durch die Testdaten und dokumentiert jeden Simulationsschritt. Weitere Analyseergebnisse (Testabdeckung) werden von der V&V Toolbox erzeugt.

Die erfindungsgemäße Vorrichtung und das entsprechende Verfahren nutzen im Wesentlich manuell erstellte Fälle und definieren anhand der Eingangswerte zeitdiskret die erwarteten Ausgangswerte. Der Bericht definiert die Abdeckung der Anforderungen aus dem Pflichtenheft durch die Testdaten und dokumentiert jeden Simulationsschritt.

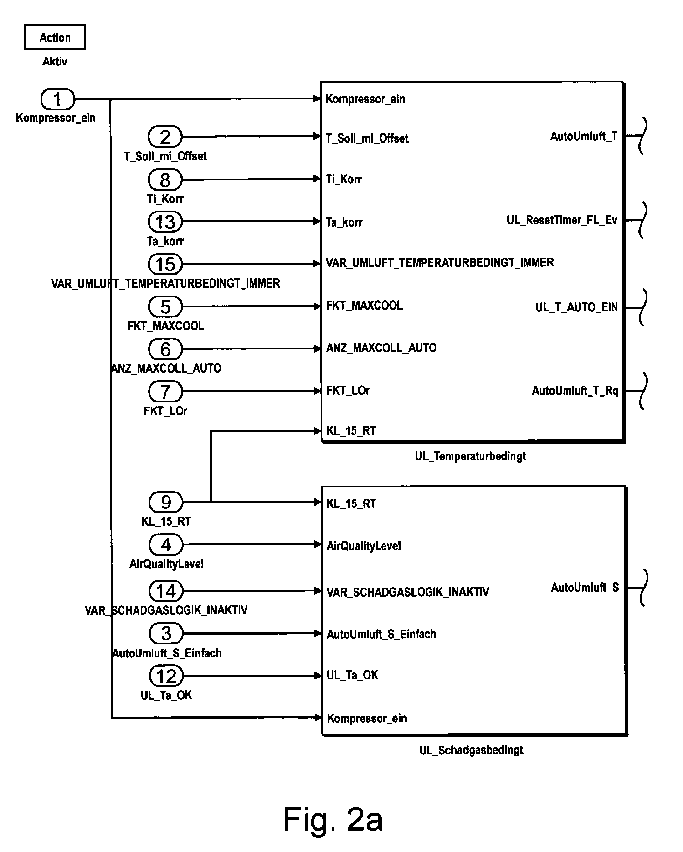

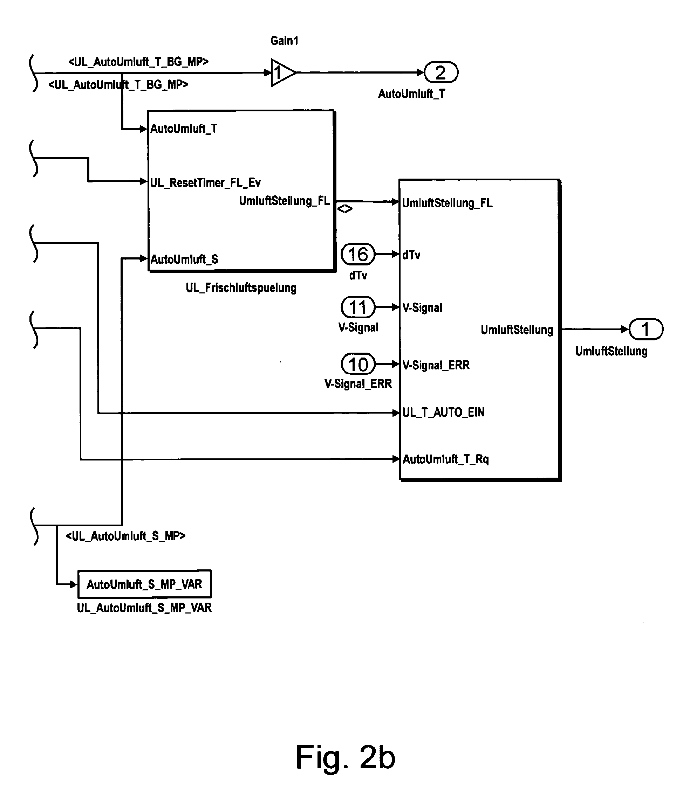

Als Testobjekte kommen maximal alle Hierarchieebenen in Frage. Häufig besteht der Wunsch, diesen Umfang einzuschränken, wenn z.B. lediglich eine Unterebene zu berücksichtigen ist. Um eine Modellebene zu testen, sollte diese Ebene mit einem Schatten versehen werden (siehe Fig 2).

### Kurze Figurenbeschreibung:

Fig. 1 zeigt ein Hierarchisches Modell in Matlab/Simulink (links die Hierarchie, rechts die Modulebene)
Fig. 2 Ebene ohne neue Funktionsanteile (rein grafisch), ausschließlich Signalleitungen.
Fig. 3: Testobjekt für die Testvorlage;
Fig. 4: Vorlage für Testdaten im Tabellenformat;
Fig. 5: Funktionaler Umfang des Testobjekts;
Fig. 6: Beispiel für einen Testfall;
Fig. 7: Generiertes Modell mit dem Testobjekt;
Fig. 8: Beispiel für Testdaten;
Fig. 9: Beispiel für einen Testbericht;
Fig. 10: Statistik des Projektfortschritts und der Abdeckung;

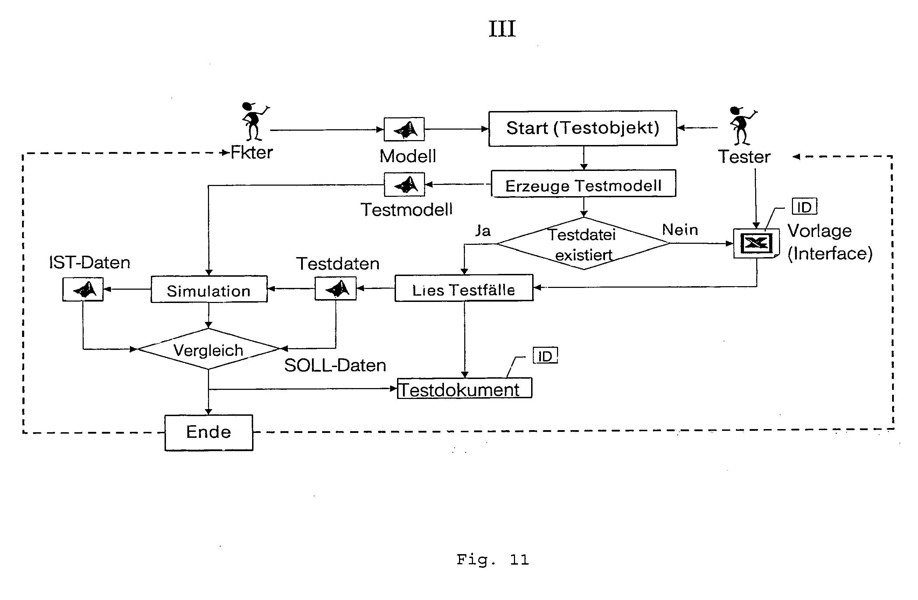

Fig. 11: Flussdiagramm der Erfindung;

Beschreibung der bevorzugten Ausführungsformen:

Das Testobjekt wurde in Fig. 2 grafisch dargestellt. Die Modellebene, die zu testen ist, ist mit einem Schatten versehen.

Nachdem der Testumfang definiert wurde, wird für jedes Testobjekt eine Vorlage erzeugt werden. Diese Vorlage beschreibt mindestens die Schnittstelle des Testobjektes und kann durch eine beliebige Anzahl von Messpunkten (Zwischenergebnisse der Berechnung) erweitert werden.

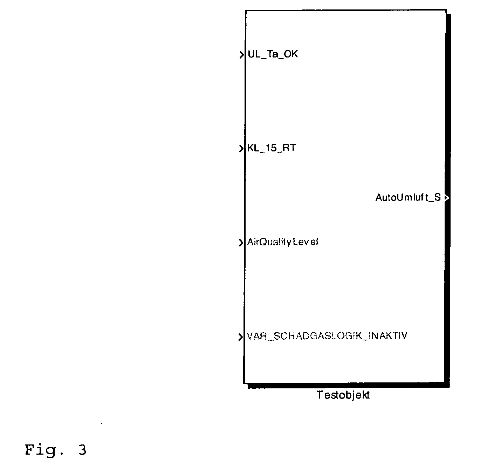

Im Folgenden wird das Testobjekt aus Fig. 3 verwendet. Dieses Testobjekt besitzt als Schnittstelle drei Eingangs- und ein Ausgangssignal:

Eingänge: UL_Ta_OK, KL_15_RT, AirQualityLevel,
VAR_SCHADGASLOGIK_INAKTIV

Ausgang: AutoUmluft_S

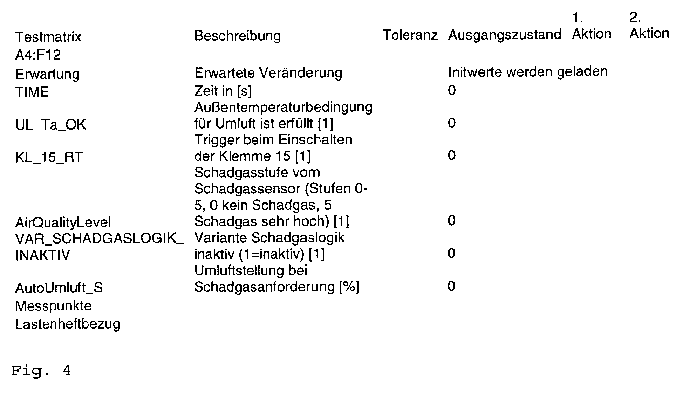

Aus diesem Testobjekt wird die Testvorlage als Excel-Tabelle gemäß Figur 4 erzeugt.

Die Erzeugung erfolgt auf der Basis von Schlüsselwörtern.
1.Testmatrix: Schlüsselwort, das den Testumfang einläutet, d.h. in der nächsten Zeile wird definiert, wie groß die Testmatrix ist (Defaultwert A4:F). Der Testumfang wird in Aktionen unterteilt. Jede Aktion umfasst vorgegebene Eingangsdaten, die zu einem vordefinierten Zeitpunkt die vorgegebenen Referenzwerte (Ausgangssignale) erfordern.
2.TIME: Zeitvektor der Testdaten. Die Zeitangaben dieser Zeile stellen Inkremente dar und danach folgen die Ein- und Ausgangssignale.
3.Messpunkte: Nach dieser Zeile folgen alle Zwischengrößen, die analog zu den Ausgangssignalen, Referenzwerte (Sollwerte) für die Simulation beschreiben.
4.Lastenheftbezug: In dieser Zeile wird die Aktion mit einem Eintrag im Lasten- bzw. Pflichtenheft verknüpft (für Blackbox-Tests erforderlich, um Traceability laut CMMI zu erfüllen).
5. Beschreibung: diese Spalte enthält eine Beschreibung jedes Signals, damit der Tester weiß, um welches physikalische Signal es sich handelt.
6.Toleranz: Genauigkeit der Referenz im Bezug zum simulierten Ergebnis (nur für Ausgangssignale und Messpunkte gültig). Die Toleranzangabe gilt für alle Aktionen des Tests.

Der Name der generierten Vorlagendatei wird vorzugsweise vom Testobjekt abgeleitet (<Testobjekt>.xls) und vorzugsweise standardmäßig im Unterverzeichnis "data" des Modellverzeichnisses abgelegt. Der Testfall wird standardmäßig im Blatt "Basis" der Vorlagendatei abgelegt.

Damit nun eine Vergleichbarkeit mit der Simulation gegeben ist, öffnet der Tester nun die Testvorlage und definiert die Testdaten dieses Testfalles.

Für die Eintragung der Testdaten pro Zelle und Aktion gelten folgende Regeln:
- der Ausgangszustand soll für alle Signale definiert sein (1. Spalte der Daten)
- eine leere Zelle bedeutet, dass der Inhalt aus der vorigen Zelle wiederholt wird. Eine Ausnahme hiervon ist die Zeile TIME. Hier gilt, dass bei einer leeren Zelle die Zeit um die Taktrate des Modells inkrementiert wird.
- Zeitangaben, die kleiner als die Taktrate sind, werden auf die Taktrate erhöht
- die Toleranz entspricht standardmäßig bei Festkommazahlen der halben Auflösung und bei Fließkommazahlen 1e-5,
- der Inhalt einer Zelle kann entweder
   o ein Zahlenwert oder
   o eine Zeichenkette sein.
   o ist der Zellinhalt eine Zeichenkette, so bestehen folgende Möglichkeiten
      ■ Parametername (konstante Zahl als Zeichenkette)
      ■ Signalname (Bezug auf Ergebnis aus der Vergangenheit, der Zugriff erfolgt per Signalname über <Signalname>[i-2], d.h. vor 2 Zeitschritten)
      ■ Funktionsnamen, die Matlab/Simulink bekannt sind. Dazu gehören alle mathematischen Funktionen, aber auch eigene Funktionen
      ■ sowie alle Ausdrücke aus den genannten Basiszeichenketten, die über beliebige Matlab-Operatoren (+,-,*,\, %, ...) verbunden werden

Anhand des Beispiels werden nun ein paar Beispiele für Zelleinträge beschrieben.

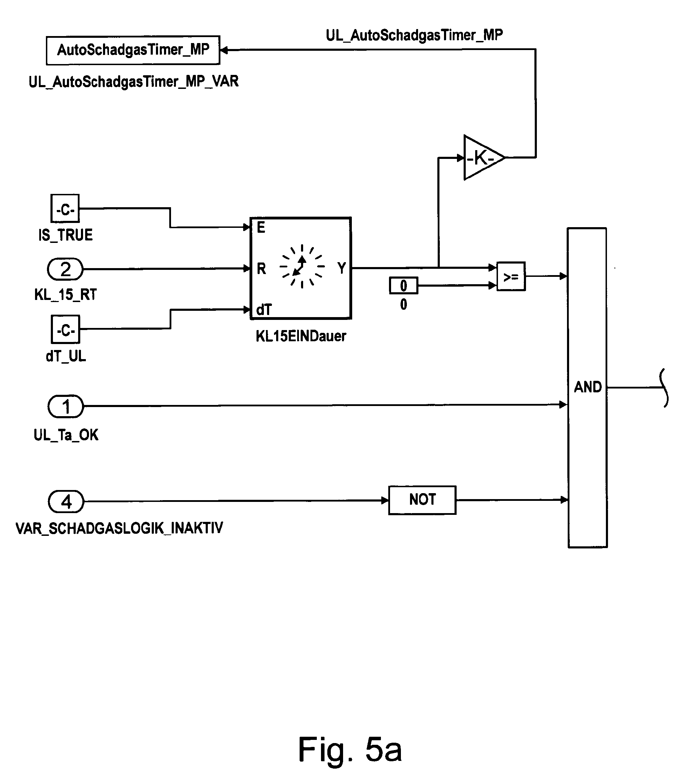

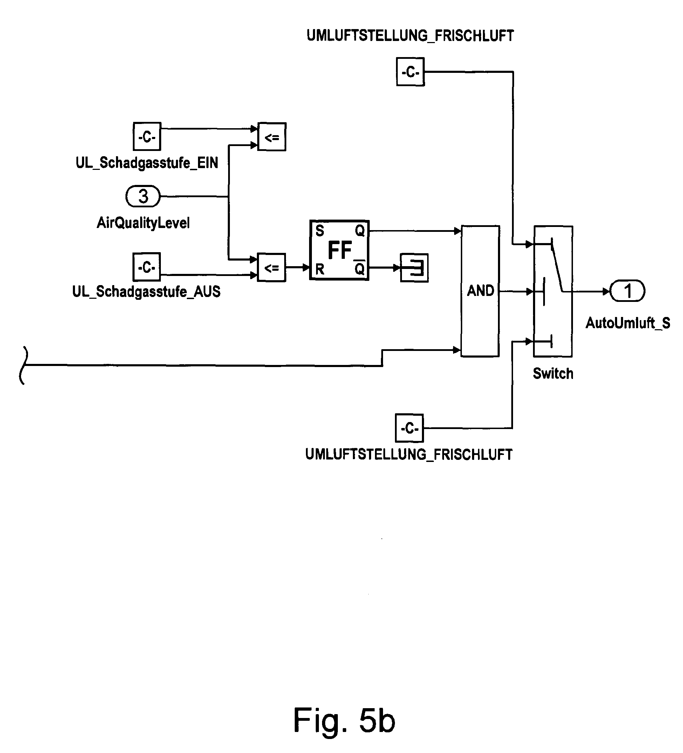

Der funktionale Umfang dieses Entwicklertests beschreibt die Fig 5. Hier werden die Eingangssignale über Operatoren und andere Basisblöcke zum Ausgangssignal verschalten.

Für das Eingangssignal VAR_SCHADGASLKOGIK_INAKTIV genügen die Zahlenwerte 1 und 0 als Einträge.

In die Zeile des Eingangssignals AirQualityLevel wird z.B. eingetragen: UL_Schadgasstufe_EIN+1 oder UL_Schadgasstufe_AUS. Dadurch kann eine parameterinvariante Testbeschreibung für dieses Signal erfolgen, d.h. wenn in der Software die Werte dieser Parameter angepasst werden, bleibt der Testfall immer noch korrekt und muss nicht verändert werden.

Als Messpunkt wird die Zwischengröße "UL_AutoSchadgasTimer_MP_VAR" eingeführt, um den Zeitgeber zu prüfen.

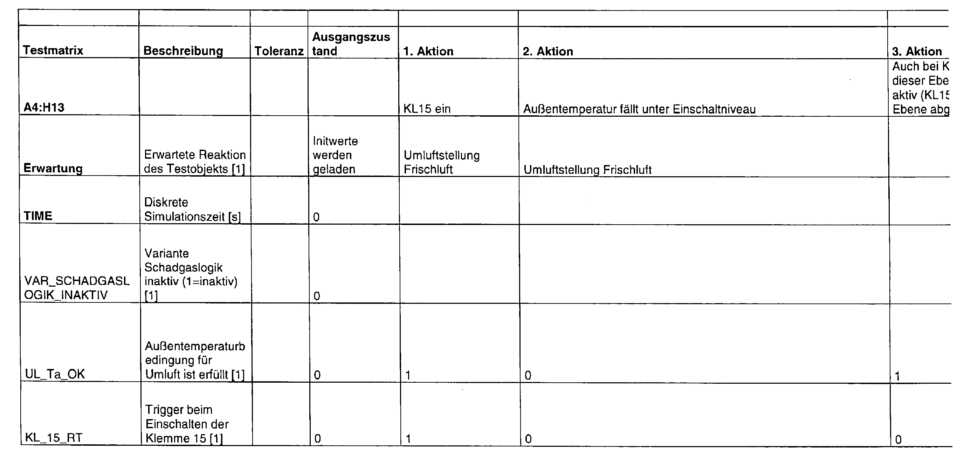

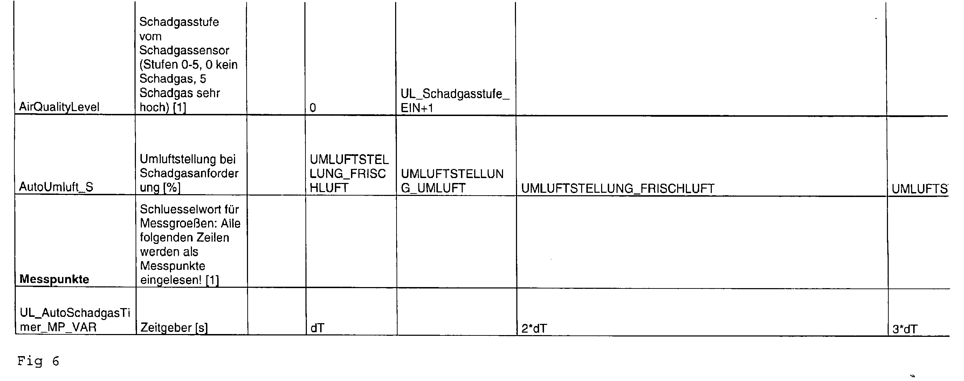

Ein Testfall könnte beispielsweise wie in Fig. 6 aussehen.

Der Tester kann weitere Testfälle anlegen, indem weitere Blätter im gleichen Testdokument angelegt werden. Daraus ergibt sich folgende Abbildung:
- Testobjekt <=> Testdatei
- Testfall <=> Blatt der Testdatei
- Testschritt <=> Aktion des Blattes der Testdatei

Dies hat zur Konsequenz, dass der Name einer Modellebene eindeutig sein soll und sich in anderen Ebenen nicht wiederholen sollten.

Diese Abbildung wird für Modultests (auf oberster Ebene) erweitert. Eine Testdatei soll auf Modulebene lediglich mit dem Namen des Testsobjektes beginnen, um als Modultest zu gelten.

Die automatische Durchführung des(r) Tests umfasst folgende Teilschritte:
- Erzeugen des Testobjekts
- Laden der Testdaten
- Simulation des Testobjektes
- Vergleich der Ergebnisse und
- Dokumentation der Ergebnisse, wenn es ein Modultest war.

Die Testumgebung besteht im Wesentlichen aus verschiedenen Funktionen, die innerhalb der Matlab-Entwicklungsumgebung auf Basis der m-Sprache erstellt wurden. Diese Entwicklungsumgebung stellt eine Kommandozeile bereit, in der eigene und eingebaute Funktionen aufgerufen werden können.

Auf dieser Grundlage wurde eine Funktion entwickelt, die den gesamten Ablauf der Testdurchführung steuert. Dieser Funktion soll sowohl das Modell als auch das Testobjekt als Argument übergeben werden. Mit Hilfe des Testobjekts wird dann im Modell nach der Ebene gesucht, die dieses Testobjekt beschreibt. Das Testobjekt wird automatisch in ein neues Modell kopiert. So stehen Befehle für die dynamische Erzeugung von Modellen zur Verfügung, z.B. add_block oder add_line usw. , die eine Kopieroperation erlauben. Diese Funktionen werden dann um Ein- und Ausgangssignale erweitert. Des Weiteren wird die Taktrate des Modells übertragen. Als Ergebnis der Testmodellgenerierung erhält man z.B. Fig. 7.

Da die Testdaten physikalischer Natur sind, werden an den Ein- und Ausgängen Konverterblöcke ergänzt.

Das Testmodell wird so konfiguriert, dass alle Simulationsergebnisse in einer Datenstruktur DATA_OUT_IST abgelegt werden.

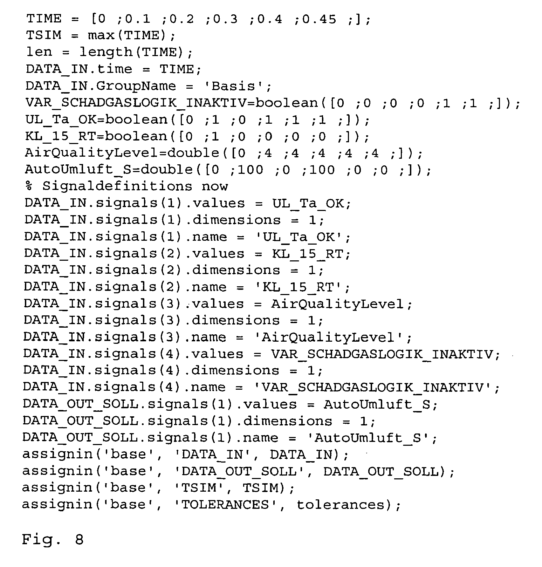

Nach der Generierung des Testmodells werden die Testdaten aus der Excel-Tabelle eingelesen und in ein Datenformat von Matlab/Simulink gewandelt. Dieses Datenformat sieht z.B. wie Fig. 8 aus.

Der Name dieser Datendatei wird vom Testobjekt und Testfall wie folgt abgeleitet <Testobjekt>_<Testfall>_data.m. Alternativen sind natürlich denkbar.

Diese Datei ist in Matlab ausführbar und erzeugt sowohl die Stimuli-(Eingangs) als auch die Referenz-(Ausgangs)daten des Testfalls.

Im weiteren Verlauf erfolgt eine Simulation des Testobjekts und ein Vergleich der Ergebnisse.

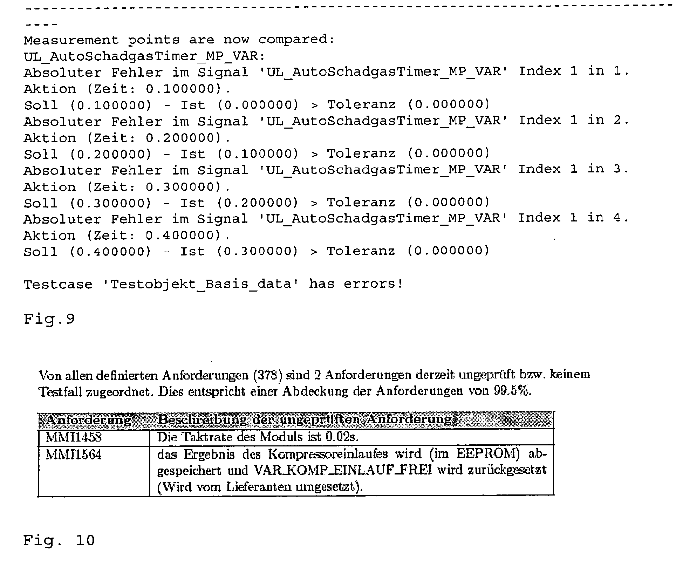

Nachdem die Daten in ausführbarer Form vorliegen, wird die Datendatei in den Arbeitsspeicher von z.B. Matlab geladen und das Modell bis zum letzten Zeitschritt ausgeführt. Nach der Simulation liegen zwei Datensätze vor, der Solldatensatz DATA_OUT_SOLL und der Istdatensatz DATA_OUT_IST. Diese Datensätze sollen nun unter Berücksichtigung der Toleranz pro Signal miteinander verglichen werden. Liegen alle Signale innerhalb der Toleranz ist der Testfall erfolgreich, ansonsten wird über eine Fehlermeldung angezeigt zu welchem Zeitpunkt ein Fehler bzw. eine Abweichung zwischen Soll- und Istdaten vorliegt. Die Fig. 9 zeigt ein Beispiel für eine Fehlermeldung.

Der Tester überprüft daraufhin, ob die Solldaten korrekt waren, wenn ja muss der Entwickler des Modells prüfen, ob ein Fehler vorliegt oder die Beschreibung des Pflichtenhefts unvollständig bzw. ungenau war.

Die Testumgebung unterstützt eine Gesamttestdurchführung, bei der alle Testobjekte eines Moduls (oberste Modellebene) hintereinander geprüft werden und das Ergebnis protokolliert wird.

Neben dem Testprotokoll wird auch für die Modultests ein Testdokument erzeugt, dass bei der SW-Auslieferung als Qualitätsdokument benötigt wird. Dies umfasst die Prüfung aller Module gegen die Pflichtenhefte der Module. Hier wird jeder einzelne Simulationsschritt mit der Veränderung an den Ausgangssignalen dokumentiert. Außerdem wird auch eine Statistik über die Abdeckung der Pflichtenhefteinträge erzeugt (Fig. 10).

Dies gelingt mit Hilfe des o.g. Schlüsselwortes "Lastenheftbezüge" und einem Auszug aus dem Pflichtenheft, das alle Pflichten identifizierbar macht.

## Patentansprüche

1. Verfahren zum automatischen Test von Simulationsmodellen für Softwarefunktionen, umfassend ein Simulationsmodell, das aus einer Mehrzahl von Objekten besteht, umfassend die folgenden Schritte:
- Herauskopieren eines oder einer Mehrzahl von Objekten aus dem Simulationsmodell auf der Basis von Selektionskriterien;
- automatisches Einbetten dieser herauskopierten Objekte in ein Template, das erneut ein simulierbares Testmodell bereitstellt;
- automatisches Erzeugen einer Tabelle, in der Eingabewerte, Zeitwerte und Ausgabewerte für Eingänge und Ausgänge der herauskopierten Objekte definierbar und editierbar sind;
- Bestimmung der Eingabewerte, Zeitwerte und Ausgabewerte für Eingänge und Ausgänge als Testdaten;
- automatische Simulation des Testmodells mit den Testdaten;
- automatisches Vergleichen der Ergebnisse und Erzeugung eines Testberichtes.

2. Das Verfahren nach dem vorhergehenden Anspruch, wobei die automatisch erzeugte Tabelle folgende Felder aufweist:
- Ausgangszustand für alle Ausgänge;
- Eingangszustand für alle Eingänge;
- Zeitpunkt als Taktrate.

3. Das Verfahren nach dem vorhergehenden Anspruch, wobei die Tabelle durch beliebige Anzahl von Messpunkten erweitert ist.

4. Das Verfahren nach einem oder mehreren der vorhergehenden zwei Ansprüche, wobei eine Toleranz eingetragen ist, innerhalb derer der Ausgangszustand sein darf.

5. Das Verfahren nach einem oder mehreren der vorhergehenden drei Ansprüche, wobei der Inhalt einer Zelle entweder
a. ein Zahlenwert oder
b. eine Zeichenkette sein kann.
c. ist der Zellinhalt eine Zeichenkette, so bestehen eine oder mehrere der folgenden Möglichkeiten:
i. Parametername (konstante Zahl als Zeichenkette)
ii. Signalname (Bezug auf Ergebnis aus der Vergangenheit, der Zugriff erfolgt per Signalname über <Signalname>[i-2], d.h. vor 2 Zeitschritten)
iii. Funktionsnamen, die Matlab/Simulink bekannt sind, dazu gehören alle mathematischen Funktionen, aber auch eigene Funktionen
iv. sowie alle Ausdrücke aus den genannten Basiszeichenketten, die über beliebige Matlab-Operatoren (+,-,*,\, %, ...) verbunden werden

6. Vorrichtung zum automatischen Test von Simulationsmodellen für Softwarefunktionen, umfassend ein Simulationsmodell, das aus einer Mehrzahl von Objekten besteht, umfassend folgende Mittel:
- Mittel zum Herauskopieren eines oder einer Mehrzahl von Objekten aus dem Simulationsmodell auf der Basis von Selektionskriterien;
- Mittel zum automatisches Einbetten dieser herauskopierten Objekte in ein Template, das erneut ein simulierbares Testmodell bereitstellt;
- Mittel zum automatisches Erzeugen einer Tabelle in der Eingabewerte, Zeitwerte und Ausgabewerte für Eingänge und Ausgänge der herauskopierten Objekte definierbar und editierbar sind;
- Mittel zur Bestimmung der Eingabewerte, Zeitwerte und Ausgabewerte für Eingänge und Ausgänge als Testdaten;
- Mittel zur automatischen Simulation des Testmodells mit den Testdaten;
- Mittel zum automatischen Vergleichen der Ergebnisse und Erzeugung eines Testberichtes.

7. Die Vorrichtung nach dem vorhergehenden Vorrichtungsanspruch, wobei die automatisch erzeugte Tabelle folgende Felder aufweist:
- Ausgangszustand für alle Ausgänge;
- Eingangszustand für alle Eingänge;
- Zeitpunkt als Taktrate.

8. Die Vorrichtung nach dem vorhergehenden Vorrichtungsanspruch, wobei die Tabelle durch beliebige Anzahl von Messpunkten erweitert ist.

9. Die Vorrichtung nach den vorhergehenden zwei Vorrichtungsansprüchen, wobei eine Toleranz eingetragen ist, innerhalb derer der Ausgangszustand sein darf.

10. Die Vorrichtung nach den vorhergehenden drei Vorrichtungsansprüchen, wobei der Inhalt einer Zelle entweder
a. ein Zahlenwert oder
b. eine Zeichenkette sein kann.
c. ist der Zellinhalt eine Zeichenkette, so bestehen eine oder mehrere der folgenden Möglichkeiten:
i. Parametername (konstante Zahl als Zeichenkette)
ii. Signalname (Bezug auf Ergebnis aus der Vergangenheit, der Zugriff erfolgt per Signalname über <Signalname>[i-2], d.h. vor 2 Zeitschritten)
iii. Funktionsnamen, die Matlab/Simulink bekannt sind, dazu gehören alle mathematischen Funktionen, aber auch eigene Funktionen
iv. sowie alle Ausdrücke aus den genannten Basiszeichenketten, die über beliebige Matlab-Operatoren (+,-,*,\, %, ...) verbunden werden

11. Datenträger umfassend eine Datenstruktur, die nach dem Laden ein Verfahren nach einem oder mehreren der vorhergehenden Ansprüche durchführt.
